# EUROPEAN PATENT APPLICATION

(11) **EP 3 323 627 A1**
(43) Date of publication of application: **23.05.2018**
(21) Application number: 16200032.7
(22) Date of filing: 22.11.2016
(51) Int. Cl.: B43K 1/02, B22F 3/105, B43K 5/00

(54) **3D PRINT OF THE NIB OF A FOUNTAIN PEN**

(71) Applicant: SOLide, SOLutions in engineering, 3311 VD Dordrecht (NL)
(72) Inventor: VAN DER MAST, Rein, 3311 VD Dordrecht (NL)
(74) Representative: Eisenführ Speiser

(57) **Abstract**

The invention relates to a method of manufacturing a fountain pen or a part of a fountain pen. A further aspect of the invention is a fountain pen and a nib for such a fountain pen. According to the invention, the fountain pen or a part of the fountain pen like the nib or at least a part of the nib of the fountain pen is manufactured by an additive manufacturing process.

## Description

The invention relates to a method of manufacturing a fountain pen or a part of a fountain pen. A further aspect of the invention is a fountain pen and a nib for such a fountain pen.

Fountain pens are traditional pens, which are mainly used for writing, calligraphy, authentic signatures and thus are a useful tool and accessory in numerous applications. Such fountain pens are usually produced in mass production technology and assembled in automatized assembling lines.

A fountain pen according to the prior art usually comprises an ink reservoir, which may be refillable or replaceable, a nib, which transfers the ink to a paper on which a writing is applied by the fountain pen and a feeder unit functionally connecting the ink reservoir with the nib to transfer ink in a desired amount out of the ink reservoir to the nib. Further a barrel might be included, which might comprise a separate tank incorporating the ink reservoir or may form a compartment surrounding the ink reservoir, a handle section for handling and guiding the fountain pen during writing and a cap for covering the nib if the fountain pen is not in use may be a part of such a fountain pen. All these parts are assembled together and may be detachable from each other, e.g. for replacing a separate ink tank.

Fountain pens are sometimes provided in different setups and variations to adapt to specific user behavior or writing techniques. As an example, such fountain pens may be configured to well-fit for the use by right-handed persons or left-handed persons. Further, fountain pens may be adapted for persons applying a high pressure to the contact point between the nib and the paper or persons applying a lower contact force. Still further, different angles of orientation between the longitudinal axis of a fountain pen and the paper surface or of the orientation of the nib versus the handle section with respect to the longitudinal axis of the fountain pen may be provided as different setups of such fountain pens.

While in general the ability of such variations and different setups of fountain pens might be useful to particularly adapt the characteristics of a fountain pen to the writing behavior of a user, it often is a difficult task to adapt the components of a fountain pen to the multiple requirements and to provide a reliable interface between such components in different variations such as to provide a reliable connection but at the same time a high degree of a variability. Still further, the manufacturing of such variations and the assembling requires significant logistic planning and thus tends to increase the costs of manufacturing.

It is an object of the invention to provide a fountain pen and a method of manufacturing a fountain pen, which better allows to adapt the fountain pen to a specific writing behavior of a user.

The problem is solved by a method of manufacturing a fountain pen or a part of a fountain pen, wherein at least a part of the nib of the fountain pen is manufactured by an additive manufacturing process.

According to the invention, a specific manufacturing method is used to produce a single part, multiple parts of the fountain pen or the whole fountain pen. This part, or these parts or the fountain pen are manufactured by an additive manufacturing process. Such additive manufacturing process is known for manufacturing individual parts in an automated process in such a way that material is applied, solidified and joint in spots, lines, layers or the like onto a platform and this is repeated multiple times in such a way that by applying spot onto spot or layer onto layer a specific geometry is build up hereby on the platform. Additive manufacturing processes are sometimes characterized as 3D printing. Such additive manufacturing can be characterized and differentiated from other manufacturing processes in that in additive manufacturing, the product to be manufactured is built up by adding material in portions and selectively in such a way that the product is built up hereby, whilst in other manufacturing processes a product may be produced by removing material from a preformed substrate in a subtractive manufacturing process, in a casting or injection moulding process requiring a mould produced in advance of the manufacturing step or by bending, stretching or otherwise deforming such a preformed substrate.

Additive manufacturing can be performed in various processes and variations. In the meaning of this description and the claims, additive manufacturing is understood to comprise a direct manufacturing process, wherein the material of which the product is composed, is solidified and joint directly in the additive manufacturing process and indirect processes, wherein in the additive manufacturing process a binder material is solidified and joint, said binder comprising particles of the material of which the product shall be composed, wherein such finalizing of the product is accomplished in a post-processing step, which is not an additive manufacturing process, like e.g. a conventional sintering process in an oven to sinter the particles of the material the product is composed of and to vaporize, melt out or burn the binder material.

Additive manufacturing processes according to this invention may comprise manufacturing techniques, wherein a material is build up layerwise and each layer is selectively solidified and joint according to a cross-sectional geometry of the product to be manufactured. Such layers may be built from a powder material or a liquid material. Further, manufacturing techniques are included, wherein a material is applied in single portions by a spraying technique, a printing technique or otherwise applying small amounts of material to a substrate to build up a product portion by portion on said substrate. Materials used in such portions may be liquid material, powder material, strands or the like. The material may be solidified and joint by selectively applying heat like e.g. by an electron beam or a laser beam, by inducing a chemical reaction like a polymerization process, e.g. by applying a radiation to selected regions or by injecting or printing an additional liquid material to selected regions of a layer, by applying the material in a heated and liquid form and solidifying it in a cooling process. Such materials are known for example as selective laser melting, selective laser sintering, selective heat sintering, binder jetting, electron beam melting, fused deposition modeling, wax deposition modeling, contour crafting, metal powder application, electron beam welding, stereolithography, digitial light processing, liquid composite molding, laminated object modeling or 3D-printing. Some of these processes are known under certain names or trademarks like LENS, DMLS, LaserCusing^{®}, XJet^{®}.

According to the invention, such an additive manufacturing process is used to produce a part of a fountain pen. In particular, such a part may be the nib of the fountain pen. In particular, multiple parts, which are integrally formed, could be manufactured in the additive manufacturing process or such multiple parts could be manufactured by additive manufacturing and assembled together in an assembling step. In the meaning of this invention, the nib is understood to be that part of a fountain pen, which includes the tip, which is in contact with the paper to transfer the ink to the paper when writing with the fountain pen. Such a nib may usually be manufactured as a metal part to withstand the forces applied to the nib, to be wear-resistant and have a certain flexibility for a convenient use of the fountain pen. However, such a nib, as well as the other parts of the fountain pen, may be manufactured from other materials like ceramics or polymer materials. Still further, the nib may be manufactured as a composite part including two or more different materials forming an integral component or being assembled together to form a nib.

According to a first preferred embodiment, the method is improved in that in said additive manufacturing process in a first step a material is applied in a partition like a portion or layer, in a second step the partition of said material are partially or completely solidified and joined to another partition applied beforehand, wherein the first and/or the second step is controlled based on geometrical data of the nib such as to apply or solidify the material in such a region which is incorporated by said part of the nib. As explained beforehand, the additive manufacturing process may in particular comprise the steps of applying a material and solidifying and joining the material to a partition of the material, which had been applied beforehand. Such a partition may be a spot, a layer or another portion like volume of the material. Solidification and joining of this partition may be accomplished simultaneously and in particular may be accomplished simultaneously with the application of the partition. In other process types, the partition may be applied first, e.g. as a layer of a liquid or a layer of a powder and hereafter may be solidified and joint selectively by e.g. applying a laser beam to selective regions of the layer and hereby melting up the powder particles or inducing a chemical reaction of the material. In particular, the selective application of the material or the selective solidification of the material is controlled by a control unit, which conducts the control on the basis of geometrical data of the product to be manufactured. In many additive manufacturing processes, the geometrical data of the product is sliced to define a plurality of stacked cross-sectional geometries of the product, which are manufactured one after the other in the additive manufacturing process. However, beside such layerwise production with each layer being a level plane with a predefined thickness, other forms and variations may be preferable like e.g. applying the material in portions, e.g. onto a platform or along the circumference of an axis. Still further, the orientation of planes may be chosen differently like e.g. horizontal planes on a horizontal substrate surface, oblique layer planes on a horizontal substrate surface or the like. In such processes, supporting structures like columns, posts or the like may be manufactured to support the product to be manufactured during the manufacturing process on the substrate plate. These supporting structures are removed from the product in a later stage, e.g. by breaking away such supporting structures along a breaking line.

A main advantage of this type of process is the possibility to design the part to be manufactured in the additive manufacturing process in detail in a virtual environment before starting the manufacturing process itself and to directly manufacture the part after the design process of the geometry, was accomplished which can be conducted on a computer to define the geometry as a dataset, which can directly be used for manufacturing or be transferred into a manufacturing dataset, without the need of programming a single or multiple tool machines, manufacturing tools as a preparatory step. This, in particular, allows to directly manufacture a nib or any other part, which affects the feeling and behavior of the nib with relation to a specific user behavior of a fountain pen directly from such data, which may describe or adapt to the part to the specific user behavior.

As a further aspect, the additive manufacturing of the nib or of other parts of the fountain pen may be used to provide an individual design of the parts or the whole pen or to include individual marks, signs, embossments or the like. By this, the design and appearance can be customized and fitted to personal pregferences, as well.

Additive manufacturing further allows to provide a fountain pen with parts out of materials which could not be manufactured in subtractive manufacturing processes economically due to their hardness. By this, the principle of additive manufacturing is used to prevent massive wear of tools by directly producing the desired contour and shape of a part.

According to a further preferred embodiment, the method is improved in that
a) the tip of the nib only is manufactured by said additive manufacturing process by manufacturing said tip of the nib onto a nib body made in a non-additive manufacturing process,
b) the shaft and tip of the nib is manufactured by said additive manufacturing process,
c) the shaft and tip of the nib and parts of ink channel and the air channel for supplying ink to the tip of the nib are manufactured by said additive manufacturing process,
d) the shaft, tip, tines, slit and vent hole of the nib are manufactured by said additive manufacturing process,
e) parts of the nib and a hood which at least partially covers the nib are manufactured by said additive manufacturing process,
f) the nib and a feed component attached to said nib and adapted to supply ink to the tip of the nib are manufactured by said additive manufacturing process,
g) the nib, a feed component, an ink channel, an air channel and an ink reservoir connected to said nib via said ink channel are manufactured by said additive manufacturing process, or
h) the nib, a feed component, an ink channel, an air channel, a grip section around said ink channel and a barrel around an ink reservoir connected to said nib via said ink channel are manufactured by said additive manufacturing process.

According to this preferred embodiment, specific parts of the fountain pen are manufactured by the additive manufacturing process, wherein either specific single parts of the nib are manufactured or the nib as a whole or beside the nib, further parts of the fountain pen are manufactured by additive manufacturing.

It is understood that according to this preferred embodiment, the single parts or single sections of parts, i.e. the components may be manufactured as an integral part in the additive manufacturing process, such that the parts are manufactured in a manufacturing process and joint to each other in said process to form a single part or the parts or components may be manufactured as separate parts, like e.g. being built up on a substrate platform separately in a single additive manufacturing process and assembled together in a subsequent assembling step hereafter. It is further understood that in an additive manufacturing process, two or more single parts or components may be manufactured as an integral part, but being joint by an interface, which allows separating the parts after the additive manufacturing process is finished to produce two or more parts, respectively, which can be moved relative to each other or mounted together and disassembled like e.g. for the purpose of having interacting parts like screw and nut, a piston in a cylinder or interchangeable parts, like different nibs mounted to a fountain pen, or separate parts, which are to be disassembled in use like e.g. a barrel or cap of the fountain pen, which needs to be releasable for e.g. refilling ink or the like.

According to a further preferred embodiment said additive manufacturing process is selected from a direct additive manufacturing process, wherein a material constituting said part of the nib is applied and solidified in said additive manufacturing process, and an indirect additive manufacturing process, wherein a binder material is applied and solidified in said additive manufacturing process, said binder material comprising particles of a material constituting said part of the nib and wherein after said additive manufacturing step a solidifying step is conducted to fuse said particles. As discussed before, parts of the fountain pen or the whole fountain pen may be manufactured by direct or indirect additive manufacturing techniques. It is understood that such additive manufacturing process may include an indirect processing, wherein the binder and the particles included in the binder are processed and the binder is not removed or removed selectively or incompletely hereafter to obtain certain material properties. Still further, such indirect additive manufacturing may be processed with specific manufacturing parameters, which are changed to solidify and join the binder material in a first region without joining the particles and to solidify and join the particles contained in the binder material in a second region of the product to obtain a product with different properties in two or more regions of the product. Generally, while indirect manufacturing is described with reference to a binder including particles it is understood that another forms of material may be applicable like e.g. binder-coated particles, powder mixtures, liquid emulsions, particles contained in a liquid, or the like.

Still further, it is preferred that in said additive manufacturing process a first predetermined region is manufactured with a first parameter of said additive manufacturing process to produce a first material property, and a second predetermined region is manufactured with a second parameter of said additive manufacturing process, which is different from said first parameter to produce a second material property, which is different from said first material property. Generally, parts of a fountain pen may require specific material properties and such specific material properties may be provided in a single region or some regions of an integral part only. This can be obtained in an additive manufacturing process by conducting the process in a first region with a first set of processed parameters and conducting the process in a second region with a second set of manufacturing parameters, which is different from the first set. E.g. the manufacturing parameters may differ in that a different layer thickness is applied, different energy of an electron beam like a laser beam is applied, the relative movement of the beam over the material may be changed, the duration of exposure to a beam or radiation may be changed, the type of material applied may be changed or any other relevant parameter affecting the properties of the material after being processed in the additive manufacturing step may be changed during the manufacturing process. By this, e.g. a porous and a dense region may be manufactured in an integral part adjacent to each other, a region having a higher elasticity than another region may be manufactured in an integral part, a region having a smooth surface and a region having a rougher surface may be manufactured in an integral part, a region having low strength for e.g. serving as a cutting or breaking line may be manufactured in a integral part with regions having a higher strength and the like.

In particular, it is preferred that said first and second material property is selected from a density of the solidified material, a porosity of the solidified material, a grain size of the solidified material, a hardness of the solidified material, an elasticity of the solidified material, a surface roughness of the solidified material, a colour of the solidified material, and a transparency of the solidified material. These specific material properties are particularly relevant for individual properties of a fountain pen, in particular, individual properties of a nib of such a fountain pen to adapt the nib to specific requirements of a user with respect to the writing behavior and writing style of the user.

According to a further preferred embodiment said additive manufacturing process is combined with a manufacturing step selected from a machining step using a cutting tool, wherein material is removed like turning, milling, grinding, polishing, shot peening or blasting process, a chemical processing step wherein a substance is applied to effect a material treatment like anodizing, etching, physical or chemical vapour deposition an electrical processing step, wherein an electrical current is applied to effect a geometrical change or a change of material properties, like erosion, electropolishing, electroplating, a thermal treatment like hardening, softening, annealing wherein said combining of the additive manufacturing process with any one or more of said additional steps comprises conducting one or more of the steps before the, after the or simultaneously with the additive manufacturing process. Whilst in some preferred embodiment the additive manufacturing process may directly produce the fountain pen or the part of the fountain pen in such a condition to be ready for direct use, other parts of the fountain pen may require some finishing or post-processing after the additive manufacturing process has ended. Relevant post-processing steps may be a machining step, a chemical processing step, an electrical processing step or a thermal treatment. By this, specific properties of the material, the surface and the geometry may be accomplished.

According to a further preferred embodiment, in said additive manufacturing process a surface in a first region of the fountain pen is manufactured having a surface property which is different, in particular rougher, more wettable, or which has a higher surface tension against ink than a surface property in a second region of the fountain pen, wherein said first and second region are integrally formed in a continuous additive manufacturing step. Such a surface property may be useful in different parts of the fountain pen for different purposes. As a first example, the handle section may comprise an oriented or arbitrary surface roughness like e.g. a number of ribs, notches, buckles, indentations or the like to facilitate handling and fixing by a user. Still further, a surface roughness may be applied to parts, which are required to impart a disassembling force like e.g. a turning or pulling of single parts of the fountain pen versus each other. Still further, a surface wettability may be provided at some other parts to have functional effects on the ink transport and the ink supply and transfer like e.g. the nib of the fountain pen may have a certain wettability over the whole ink-transporting region surface to improve the ink transport or to prevent unwanted drying of ink.

The method according to the invention may be further improved in that in said additive manufacturing process a separating structure of the nib is manufactured, said separating structure being intersected between two tines of the nib and said separating structure having a design selected from
a) a slit along a straight line,
b) a slit along curved line like e.g. a line changing its direction of curvature once or twice,
c) a slit composed of a single or multiple branched line,
d) a pair of slits, wherein each of said slits extends along a straight or curved line and wherein said slits preferably run parallel,
e) multiple slits, wherein each of said slits extends along a straight or curved line and wherein said slits preferably run parallel, or
f) a combination of any of the slits according to a) to e).

A particularly important structure of the nib of a fountain pen is a slit separating two tines at the nib, wherein said tines end in the tip of the nib and thus the slit extends to said tip. The slit both defines the elastic properties of the nib and the ink transport. The properties of the nib thus are significantly influenced by the design of the slit. In conventional manufacturing of nibs, the slit needs to be manufactured into the nib in a post-processing step like cutting after the body of the nib has been manufactured by e.g. deforming a metal plate and thus the design and variations of the slit to a large extent are limited by the tools available for conducting such a cutting process. In contrast to this, it is feasible in additive manufacturing to directly manufacture the slit in an integral manufacturing step while producing the body of the nib. Further, the design of the slit, i.e. its geometry, the gap width along its length can be chosen according to specific requirements, including variable gap width along the length of the slit, bifurcated or trifurcated slits and the like.

Still further, it is preferred that in said additive manufacturing process a first stopper structure is manufactured, said first stopper structure being integrally with a first one of said tines and having an abutting face positioned adjacent and in a predetermined distance to a second one of said tines such as to prevent a relative displacement or deformation of said second time in relation to said first tine to exceed a predetermined range defined by said predetermined distance. Such stoppers at the nib, in particular at the tines of such a nib may prevent damage to the nib induced by application of too high loads due to inappropriate use of the fountain pen or by accidents like the fountain pen falling onto its nib or the like. The stoppers are designed to prevent the two tines of the nib to undergo a deformation in relation to each other, which is too big, in particular, which goes beyond the elastic deformation behavior of one of the tines and reaches plastic deformation, thus effecting a permanent deformation after the load was removed. The stoppers may, for this purpose, allow a limited range of movement of one tine versus the other, but block such movement or force the two tines to move together and synchronously if this limited range is exceeded.

According to a further improved embodiment in said additive manufacturing process an ink channel for conveying ink to a tip of the nib is manufactured, said ink channel preferably extending from said tip of the nib and said ink channel having a cross-section, which is at least partially, preferably fully encompassed by material produced in said additive manufacturing process. Such an ink channel may be an open notch at the nib, in a feeder component or the like, the ink channel may alternatively be provided as a tube or the like at the nib, the feeder or another component of the fountain pen and combinations of such ink channel sections formed as a notch or a tube may be provided. The ink channel may comprise an empty space for allowing the ink to free-flow through the ink channel or may comprise an open porous filling of the ink channel, wherein the ink is transported through said open porous filling like e.g. by a capillary action along said pores. Ink transport through said ink channel may be conducted or enforced by different mechanisms and combinations of mechanisms like e.g. gravity, capillary action, vibrations of the fountain pen or parts of it, suction or other pressure difference effects or the like.

According to a further preferred embodiment, in said additive manufacturing process a nib having a nib surface comprising a single or multiple ribs or grooves being integrally formed on said nib surface is manufactured, wherein any such rib or groove is manufactured to
- be straight,
- be curved,
- have a continuous width along its length,
- have an increasing width along its length,
- have a continuous height above or depth below, respectively, the nib surface along its length, or
- have an increasing height above or depth below, respectively, the nib sur-face along its length.

Such ribs or grooves may particularly influence the elastic behavior of the nib by producing specific bending curves, limiting the bending of specific regions or the like. Further, such ribs or notches or grooves may improve the ink transportation along the nib and thus may have a bifunctional effect at the nib. It is understood that such ribs, grooves or notches may in particular be modified and varied to adapt the nib to specific user behavior in writing.

According to a further preferred embodiment, in said additive manufacturing process a nib is manufactured, said nib comprising
- a lattice structure,
- a first and a second base integrally formed with said nib, wherein said first and second base are arranged in a distance to each other and are adapted to be coupled by a tensioning element to apply an adjustable tensioning force between said two bases, such as to adjust a curvature of the nib,
- a single rod or multiple rods each extending along a rod extension line and each being coupled to said nib for a longitudinal movement of each rod along its rod extension line for adjustment of a curvature and/or stiffness of said nib, and/or
- a slit separating a first and a second tine of the nib, an ink supply area having a lower density than the first and second tine, wherein said ink supply area preferably is positioned adjacent and in line with said slit.

These specific components, which are preferably integrally formed at the nib, can effectively be manufactured in an additive manufacturing process in many different designs and thus affect the functional properties of the nib. A lattice structure may serve to improve ink transportation along the nib and prevent drying of the ink at regions where it is not intended to take place. A first and a second base may serve to provide anchor points at the nib for applying a tension or pressure between two distanced sections of the nib to hereby either effect or change a bending curve of the nib, to provide a stiffening effect in different magnitudes, which can be adjusted by adjusting the tensioning or pressurizing force between the two bases or to adjust the width of a slit between two tines by applying a tensioning or pressurizing force between two such bases.

Provision of a single or multiple rods, which can be moved along its longitudinal axis, may further be helpful to modify the bending behavior of the nib and its elasticity or to provide a specific curvature of the nib. In particular, such rods may be coupled to the nib via a hinge-like structure e.g. a film hinge manufactured in the additive manufacturing process such that by a translational movement of the rod, the bending and curvature of the nib may take place around said film hinge and the force applied by said rod by a pretensioning of the rod is applied via said film hinge.

Still further, a slit may be provided, which can directly be manufactured in the additive manufacturing process in different designs, as described beforehand, to improve the elastic properties of the tines and the ink transportation along such a slit.

A further aspect of the invention is a nib for a fountain pen, wherein said nib is manufactured at least partially, preferably completely by an additive manufacturing process.

The nib may comprise a separating structure manufactured in said additive manufacturing process, said separating structure being intersected between two tines of the nib and said separating structure having a design selected from
a) a slit along a straight line,
b) a slit along curved line like e.g. a line changing its direction of curvature once or twice,
c) a slit composed of a single or multiple branched line
d) a pair of slits, wherein each of said slits extends along a straight or curved line and wherein said slits preferably run parallel,
e) multiple slits, wherein each of said slits extends along a straight or curved line and wherein said slits preferably run parallel, or
f) a combination of any of the slits according to a) to e).

The nib may comprise a first stopper structure manufactured in said additive manufacturing process, said first stopper structure being integrally with a first one of said tines and having an abutting face positioned adjacent and in a predetermined distance to a second one of said tines such as to prevent a relative displacement or deformation of said second tine in relation to said first tine to exceed a predetermined range defined by said predetermined distance.

The nib may comprise an ink channel for conveying ink to a tip of the nib, said ink channel preferably extending from said tip of the nib, said ink channel manufactured in said additive manufacturing process and having a cross-section, which is at least partially, preferably fully encompassed by material produced in said additive manufacturing process.

The nib may comprise a nib surface with a single or multiple ribs or grooves being integrally formed on said nib surface and manufactured in said additive manufacturing process, wherein any such rib or groove is straight, curved, has a continuous width along its length, has an increasing width along its length, has a continuous height above or depth below, respectively, the nib surface along its length, or has an increasing height above or depth below, respectively, the nib surface along its length.

The nib may comprise a lattice structure, a first and a second base integrally formed with said nib, wherein said first and second base are arranged in a distance to each other and are adapted to coupled by a tensioning element to apply an adjustable tensioning force between said two bases, such as to adjust a curvature of the nib, a single rod or multiple rods each extending along a rod extension line and each being coupled to said nib for a longitudinal movement of each rod along its rod extension line for adjustment of a curvature and/or stiffness of said nib, a slit separating a first and a second tine of the nib, an ink supply area having a lower density than the first and second tine, wherein said ink supply area preferably is positioned adjacent and in line with said slit.

A further aspect of the invention is a fountain pen comprising a single or multiple parts manufactured in an additive manufacturing process or being manufactured completely in an additive manufacturing process. In particular, such a fountain pen may comprise a nib, which is produced in an additive manufacturing process and which may be configured as described beforehand.

Preferably, in said fountain pen,
a)the tip of the nib only is manufactured by said additive manufacturing process by manufacturing said tip of the nib onto a nib body made in a non-additive manufacturing process,
b)the shaft and tip of the nib is manufactured by said additive manufacturing process,
c)the shaft and tip of the nib and parts of ink channel and the air channel for supplying ink to the tip of the nib are manufactured by said additive manufacturing process,
d)the shaft, tip, tines, slit and vent hole of the nib are manufactured by said additive manufacturing process,
e) parts of the nib and a hood which at least partially covers the nib are manufactured by said additive manufacturing process,
f) the nib and a feed component attached to said nib and adapted to supply ink to the tip of the nib are manufactured by said additive manufacturing process,
g)the nib, a feed component, an ink channel, an air channel and an ink reservoir connected to said nib via said ink channel are manufactured by said additive manufacturing process, or
h)the nib, a feed component, an ink channel, an air channel, a grip section around said ink channel and a barrel around an ink reservoir connected to said nib via said ink channel are manufactured by said additive manufacturing process.

The fountain pen may be built up such that in said additive manufacturing process the components listed under a) to h) as listed beforehand, respectively, are manufactured as an integral part.

Still further, an aspect of the invention is the use of an additive manufacturing apparatus to manufacture a fountain pen or part of a fountain pen, in particular a nib.

Still further, an aspect of the invention is the use of an additive manufacturing process to manufacture a fountain open or a part of a fountain pen, in particular a nib.

Still further, an aspect of the invention is the use of an additive manufacturing process for producing a nib of a fountain pen, wherein in a first step, a user preference property of a nib is determined using a specific nib, which can be adjusted with regard to at least one property selected from the ink transport, the width of the line produced by the nib on the paper, the angle of orientation of the longitudinal axis of a fountain pen versus the plane of the paper to be adapted to a smooth gliding of the nib over the paper, the elastic properties of the nib and the angle of orientation of the nib about a longitudinal axis in relation to a handle section of a fountain pen to effect a smooth gliding of the tip of the nib over a paper surface. After a parameter of the nib, which is individual for the person using such adjustable fountain pen was determined, this individual parameter is used either to modify a dataset for manufacturing a nib of a fountain pen or to select a specific dataset out of multiple datasets for manufacturing a fountain pen to conform with the specific user requirements. Hereafter, the nib is produced according to the such defined dataset for manufacturing the nib.

Preferred embodiments of the invention are described in detail with reference to the figures. In the figures:
- Fig. 1: shows a setup of a fountain pen according to a first embodiment of the invention,
- Fig. 2: shows a setup of a second embodiment of a fountain pen according to the invention,
- Fig. 2a: shows an exploded and partially sectional view of the second embodiment,
- Fig. 3: shows a perspective view of a nib according to a third embodiment of the invention,
- Fig. 4: shows a top view of a nib and a handle section according to a fourth embodiment of the invention,
- Fig. 4a: shows a cross-sectional side view of the fourth embodiment along line A-A,
- Fig. 4b: shows a cross-sectional front view of the fourth embodiment along line B-B,
- Fig. 4c: shows a cross-sectional frontal view of the fourth embodiment along line C-C,
- Fig. 5: shows a perspective view of a nib according to a fifth embodiment of the invention,
- Fig. 6: shows a perspective view of a nib according to a sixth embodiment of the invention,
- Fig. 7: shows a perspective view of a nib according to a seventh embodiment of the invention,
- Fig. 7a: shows a cross-sectional frontal view of the seventh embodiment along line A-A,
- Fig. 8: shows a perspective view of a nib according to a eighth embodiment of the invention,
- Fig. 8a: shows a sectional side view of the eighth embodiment along line A-A,
- Fig. 9: shows a perspective view of a nib according to an ninth embodiment of the invention,
- Fig. 9a: shows a sectional side view of the ninth embodiment along line A-A,
- Fig. 10: shows a perspective view of a nib comprising five different embodiments a) to e) of a slit according to the invention,
- Fig. 10f: shows a cross-sectional frontal view along line A-A in Fig. 10e,
- Fig. 11: shows a perspective view of a nib according to a tenth embodiment of the invention,
- Fig. 12: shows a top view of a nib and a handle section of an eleventh embodiment according to the invention,
- Fig. 12a: shows a sectional side view of the eleventh embodiment of Fig. 12,
- Fig. 13: shows a sectional side view of a fountain pen according to a twelfth embodiment of the invention.

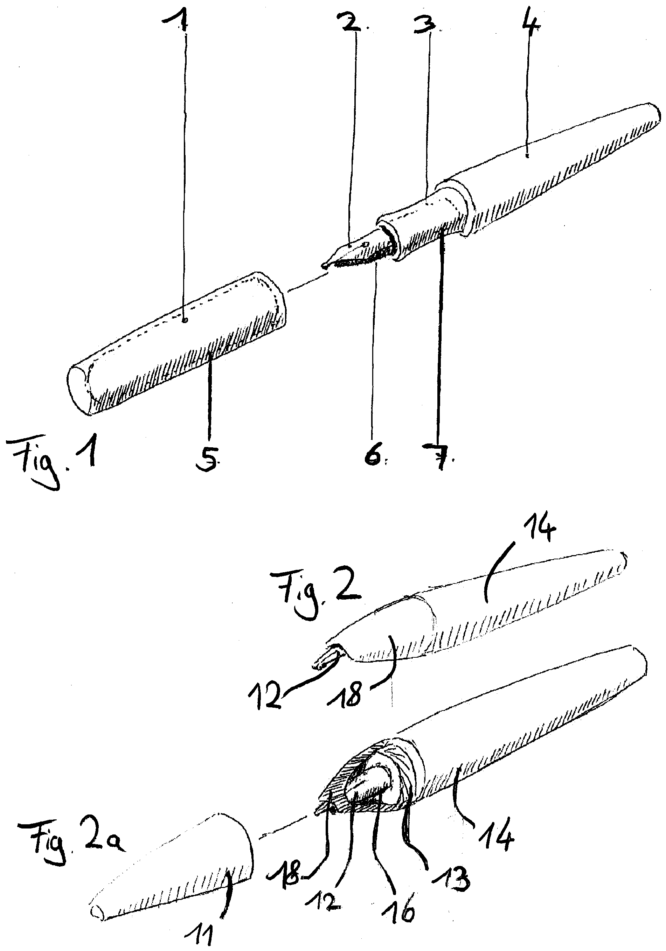

With reference first to Fig. 1, a fountain pen according to the invention comprises a cap 1, comprising an inner cap shown in dotted lines, which can be assembled to encapsulate a nib 2 and a handle section 3 of the fountain pen. On the underside of nib 2, a feed 6 is arranged for transporting ink to the nib 2. Finally, a barrel 4 incorporating an ink reservoir is provided on the opposite end to the nib of the fountain pen. Inside the handle section 3, an inner section 7, shown in dotted lines, is provided wherein an ink feeding mechanism for transporting the ink from the ink reservoir in barrel 4 to the nib 2 is provided. It is understood that any of these parts, multiple parts or all parts, may be manufactured by additive manufacturing to provide a fountain pen adapted to individual requirements and needs of a user.

Fig. 2 and Fig. 2a show a second embodiment of the invention, according to the fountain pen of this second embodiment, a cap 11 and a barrel 14 is provided at this fountain pen, which can be assembled and detached. Further, a nib 12 is provided with a feed 16 and a connector in the inner section 13 is provided. According to this particular embodiment, a hood 18 is partially covering the nib 12 to protect said nib from mechanical impact. This hood may be manufactured by additive manufacturing, too.

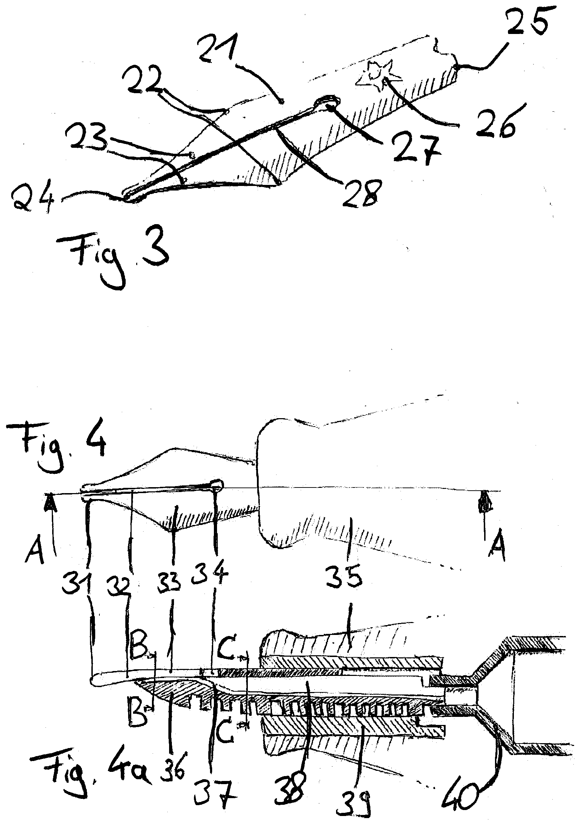

With reference to Fig. 3, the setup of a nib, according to the invention, which can be manufactured by additive manufacturing, is shown. A shaft 21, which represents the whole nib and may be called shank or body as well, extends from a base 25 to a tip 24 of the nib. A slit 28 extends from the tip 24 along a mid-line of the shaft right to a vent, also called vent-hole or breather hole of the nib. The vent 27 is shown to be positioned approximately in the center of the nib right between the base 25 and the tip 24, but may be positioned closer to the tip or closer to the base as well. The slit 28 divides the shaft 21 in the region from the vent 27 to the tip 24 into two tines 23 extending longitudinally along said slit 28 at both sides of the shaft. Still further, an imprint 26, which may be embossed or elevated, is shown, which may serve two characterized properties of the nib or its origin, a trademark or the like.

It is understood that the nib as shown in Fig. 3 may be manufactured by an additive manufacturing process, allowing to provide individual design of any of these parts, including the imprint 26, the size and design of the vent 27, the size and design of the slit 28 and the geometry, curvature, thickness of the tines 23 as well as the design of the tip 24.

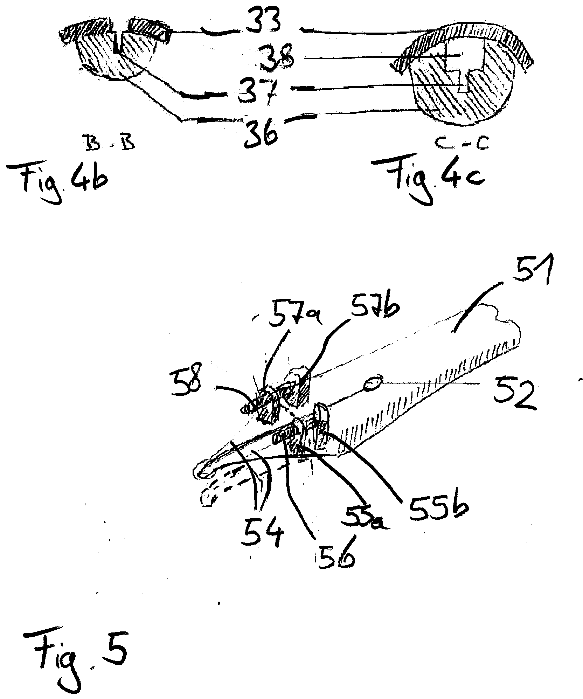

Making reference to Figs. 4 and 4a-c, the setup of the front part of a fountain pen including the nib, feeder and handle section is shown in detail. As can be seen, the nib comprises a tip 31 and a slit 32 extends from said tip to a vent 34. The nib 33 is inserted with its shaft into a handle section 35, such that approximately a quarter or less of the shaft of the nib is frictionally engaged or form-locked in the handle section 35.

A feed 36 is positioned adjacent to the nib and in close contact to the nib. The feed extends from a section somewhat distanced to the tip 21 of the nib, right to an ink reservoir 40. The feed comprises an ink channel 37 and an air channel 38 for providing air into the ink reservoir and for supplying ink out of the reservoir to the tip of the nib via the slit 32.

Fig. 5 shows a fifth preferred embodiment of the invention. The nib 51 shown in this embodiment comprises a vent 52 and a slit extending from said vent 52 to a tip of the nib. The slit divides the shaft into two tines 54. On the upper side of said tines, each tine comprises two bosses 55a, b and 57a, b, respectively. The bosses serve as anchor points and are coupled via a screw 56, 58, respectively, such that via the screw a tensional force or a pressure force between the bosses 55a and b and the bosses 57a and b, respectively, can be applied. By this, the curvature of the tines 54 can be changed, as shown in dotted lines by another bending line of the tines in Fig. 5. The nib 51 shown in this fourth embodiment thus may be adapted to have different curvatures of the tines to fit to personal individual needs of a user.

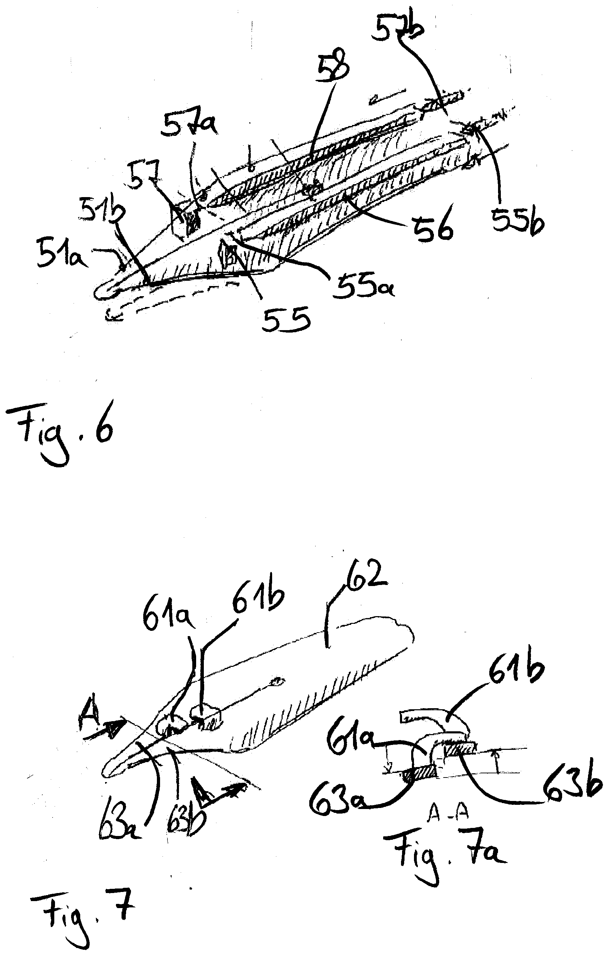

Fig. 6 shows a sixth embodiment of a nib according to the invention. The nib shown in this embodiment comprises a single embossment 55, 57 on each of two tines 51a, b. Each of said embossments 55, 57 is coupled via a film hinge 55a, 57a to a rod extending from each of said embossments right to the base of the nib. The rods 56, 58 are attached for a sliding movement along its longitudinal axis to the surface of the nib. This attachment may be done by a channel or tube formed on the surface of the nib and form-locking the rods inside. At the end of the rods opposed to the film hinge 55a, 57a, adjusting screws 55b, 57b are engaging the rods 56, 58. By these adjusting screws 55b, 57b, the rods may be pushed in its longitudinal direction, such that a force is applied to the embossments 55, 57 via the film hinges 55a, 57a. By this, the curvature of the tines 51a, 51b can be adjusted via the adjusting screws 55b, 57b as shown in dotted lines.

Fig. 7 shows a seventh embodiment of the invention comprising two tines 62, separated by a slit. Each of said tines comprises a stop 61, which has general form like an L, wherein one leg of the L is attached to the tine and the other leg of the L extends over the adjacent tine. This is shown in detail in Fig. 7a, wherein one of the tines 63 is deformed in relation to the other tine 63b such that the stop 61a of said tine comes into contact with the other tine 63b. by this stopping action, a further individual deformation of the tine 63a versus the other tine 63b is prevented such that both tines must deform together and thus, a strong deformation of one of the tines versus the other is prevented by these stops 61 a, b.

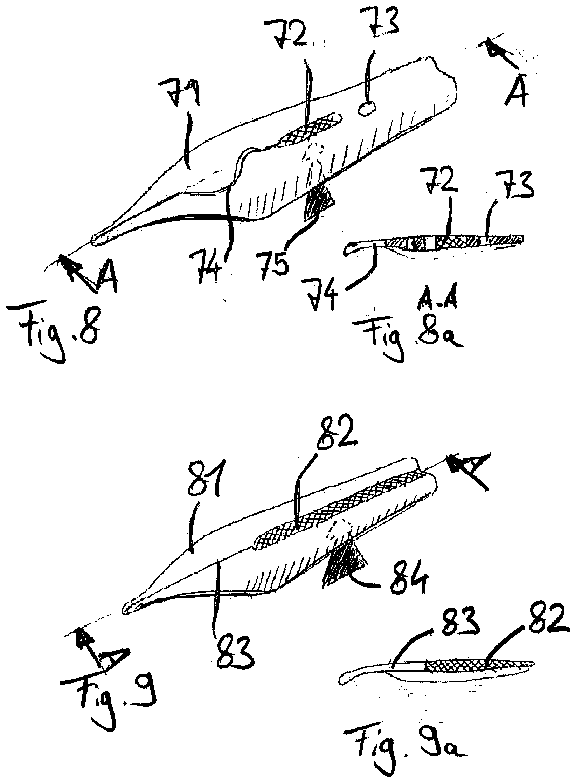

Fig. 8 and Fig. 8a show an eighth embodiment of the invention. In this embodiment, a nib 71 comprises a slit 74 extending from the tip of the nib right to a sintered low density area of said nib. This low density area is supplied with ink, as shown by an ink supply 75 such as to allow said ink to flow along the slit 74 to the tip. The slit is shown to be nonlinear, but having a curved design with multiple changes of the curvature, which improves the elastic behavior of the nib for certain applications.

A vent-hole 73 is provided in a distance to the sintered low density area 72 and according to this embodiment, said vent-hole 73 is not in contact with the slit 74. It is understood that such venthole may be omitted as well.

Fig. 9 and Fig. 9a show a ninth embodiment of the invention. According to this embodiment, a nib 81 comprises a straight slit 83 extending from the tip of the nib to a sintered low density area 82. An area 82 may be provided as a lattice structure or a structure of multiple ribs or blades or an open porous structure manufactured by a modified parameter of the additive manufacturing process. Ink is provided, as symbolized by ink supply 84 to said sintered low density area 82.

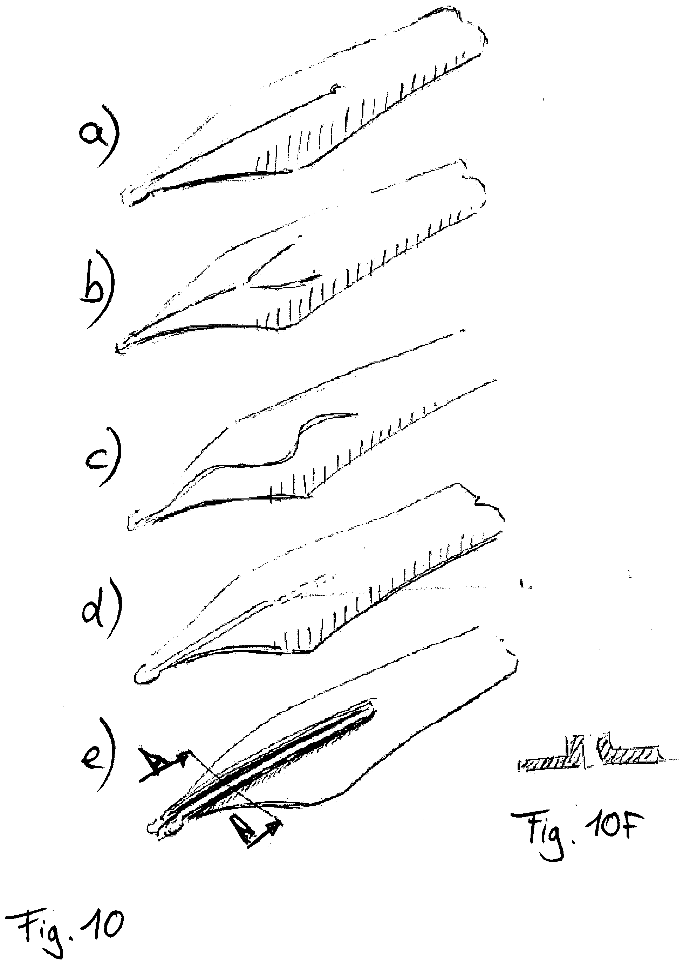

Fig. 10 shows different embodiments of slits in a nib according to the invention. Fig. 10a shows a bifurcated slit with the form of a Y, having its base at the tip of the slit. Fig. 10b shows a slit embodied as a small tube inside the nib. Fig. 10c shows a curved slit with multiple changes of the curvature. Fig. 10d shows a straight slit. Fig.10e shows a slit, wherein the nib has a greater height in the region adjacent to the slit than in the other parts of the nib so as to provide more ink to the tip without changing the width of the line.

The design of the slit shown in Fig. 10e is shown in a cross-sectional view in Fig. 10f.

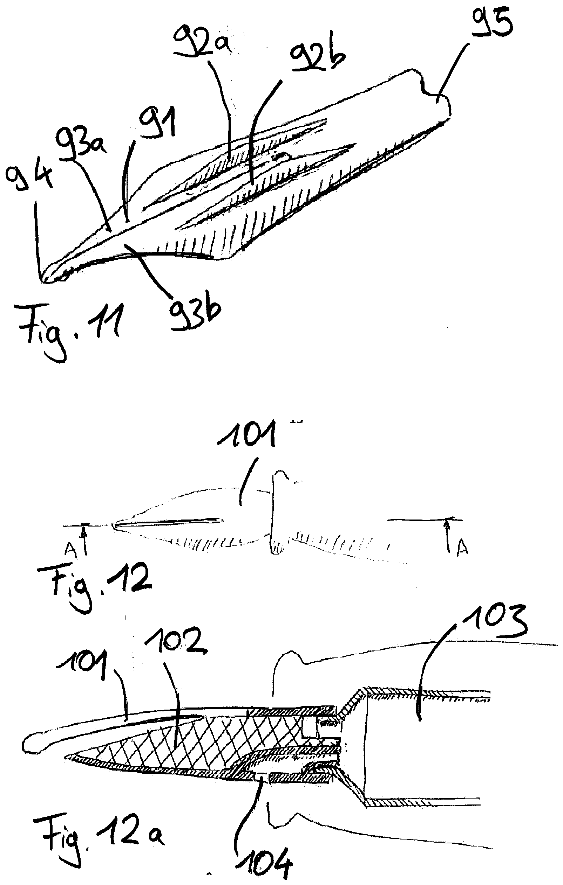

Fig. 11 shows a tenth embodiment of a nib according to the invention. According to this embodiment, a nib 91 comprises two separate ribs extending in the longitudinal direction on both sides of a slit and beyond the end of said slit towards the base of the shaft of the nib. The ribs are formed to increase both its width and height to the middle of the rib and to flatten out with regard to height and width to both ends of the rib.

Fig. 12 shows an eleventh embodiment of the invention, wherein a nib 101 with a feed 102 is formed as an integral part and manufactured in an additive manufacturing process. Said nip and feed 101, 102 are assembled to a cartridge 3, 103. On the bottom side opposite to the nib, an air channel 104 is incorporated in said feed 102 to allow air to enter into the cartridge 103. Adjacent to said air channel 104, the feed 102 is coupled to said cartridge 103. An open porous or otherwise designed structure of the feed 102 allows ink to flow from the cartridge 103 towards the nib 101 and to arrive via a slit at the tip of said nib 101.

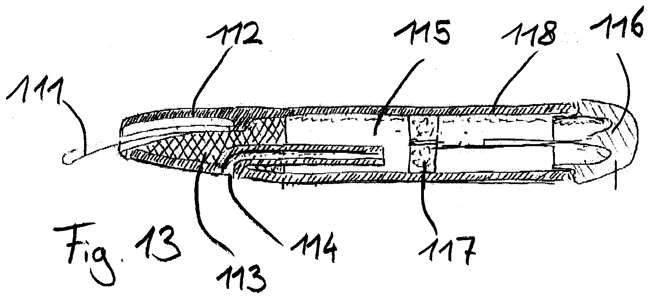

Finally, Fig. 13 shows a twelfth embodiment of the invention, wherein a fountain pen including a nib 111, a hood 112, a feeder 113, an air channel 114, an ink reservoir 115 and a filling mechanism with a turnable cap 116 and a piston 117 inside the ink reservoir and sealed against an inner wall of a barrel 118 is shown. In this embodiment, all parts of the fountain pen are manufactured by additive manufacturing.

## Claims

1. A method of manufacturing a fountain pen or a part of a fountain pen, **characterized in that** at least a part of the nib of the fountain pen is manufactured by an additive manufacturing process.

2. The method according to claim 1, wherein
in said additive manufacturing process in a first step a material is applied in a partition like a portion or layer,
in a second step the partition of said material are partially or completely solidified and joined to another partition applied beforehand,
wherein the first and/or the second step is controlled based on geometrical data of the nib such as to apply or solidify the material in such a region which is incorporated by said part of the nib.

3. The method according to claim 1 or 2, wherein
a) the tip of the nib only is manufactured by said additive manufacturing process by manufacturing said tip of the nib onto a nib body made in a non-additive manufacturing process,
b) the shaft and tip of the nib is manufactured by said additive manufacturing process,
c) the shaft and tip of the nib and parts of ink channel and the air channel for supplying ink to the tip of the nib are manufactured by said additive manufacturing process,
d) the shaft, tip, tines, slit and vent hole of the nib are manufactured by said additive manufacturing process,
e) parts of the nib and a hood which at least partially covers the nib are manufactured by said additive manufacturing process,
f) the nib and a feed component attached to said nib and adapted to supply ink to the tip of the nib are manufactured by said additive manufacturing process,
g) the nib, a feed component, an ink channel, an air channel and an ink reservoir connected to said nib via said ink channel are manufactured by said additive manufacturing process, or
h) the nib, a feed component, an ink channel, an air channel , a grip section around said ink channel and a barrel around an ink reservoir connected to said nib via said ink channel are manufactured by said additive manufacturing process.

4. The method according to the preceding claim 3, wherein in said additive manufacturing process the components listed under a) to h), respectively are manufactured as an integral part.

5. The method according to any of the preceding claims, wherein said additive manufacturing process is selected from
- a direct additive manufacturing process, wherein a material constituting said part of the nib is applied and solidified in said additive manufacturing process, and
- an indirect additive manufacturing process, wherein a binder material is applied and solidified in said additive manufacturing process, said binder material comprising particles of a material constituting said part of the nib and wherein after said additive manufacturing step a solidifying step is conducted to fuse said particles.

6. The method according to any of the preceding claims, wherein in said additive manufacturing process
- a first predetermined region is manufactured with a first parameter of said additive manufacturing process to produce a first material property, and
- a second predetermined region is manufactured with a second parameter of said additive manufacturing process, which is different from said first parameter to produce a second material property, which is different from said first material property.

7. The method according to claim 6, wherein said first and second material property is selected from
- a density of the solidified material,
- a porosity of the solidified material,
- a grain size of the solidified material,
- a hardness of the solidified material,
- an elasticity of the solidified material,
- a surface roughness of the solidified material,
- a colour of the solidified material, and
- a transparency of the solidified material.

8. The method according to any of the preceding claims, wherein said additive manufacturing process is combined with a manufacturing step selected from:
- a machining step using a cutting tool, wherein material is removed like turning, milling, grinding, polishing, shot peening or blasting process,
- a chemical processing step wherein a substance is applied to effect a material treatment like anodizing, etching, physical or chemical vapour deposition
- an electrical processing step, wherein an electrical current is applied to effect a geometrical change or a change of material properties, like erosion, electropolishing, electroplating,
- a thermal treatment like hardening, softening, annealing.
Wherein said combining of the additive manufacturing process with any one or more of said additional steps comprises conducting one or more of the steps before the, after the or simultaneously with the additive manufacturing process.

9. The method according to any of the preceding claims, wherein in said additive manufacturing process a surface in a first region of the fountain pen is manufactured having a surface property which is different, in particular rougher, more wettable, or which has a higher surface tension against ink than a surface property in a second region of the fountain pen, wherein said first and second region are integrally formed in a continuous additive manufacturing step.

10. The method according to any of the preceding claims, wherein in said additive manufacturing process a first stopper structure is manufactured, said first stopper structure being integrally with a first one of said tines and having an abutting face positioned adjacent and in a predetermined distance to a second one of said tines such as to prevent a relative displacement or deformation of said second time in relation to said first tine to exceed a predetermined range defined by said predetermined distance.

11. The method according to any of the preceding claims, wherein in said additive manufacturing process an ink channel for conveying ink to a tip of the nib is manufactured, said ink channel preferably extending from said tip of the nib said ink channel having a cross-section, which is at least partially, preferably fully encompassed by material produced in said additive manufacturing process.

12. The method according to any of the preceding claims, wherein in said additive manufacturing process a nib having a nib surface comprising a single or multiple ribs or grooves being integrally formed on said nib surface is manufactured, wherein any such rib or groove is manufactured to
- be straight,
- be curved,
- have a continuous width along its length,
- have an increasing width along its length,
- have a continuous height above or depth below, respectively, the nib surface along its length, or
- have an increasing height above or depth below, respectively, the nib surface along its length.

13. The method according to any of the preceding claims, wherein in said additive manufacturing process a nib is manufactured, said nib comprising
- a lattice structure,
- a first and a second base integrally formed with said nib, wherein said first and second base are arranged in a distance to each other and are adapted to coupled by a tensioning element to apply an adjustable tensioning force between said two bases, such as to adjust a curvature of the nib,
- a single rod or multiple rods each extending along a rod extension line and each being coupled to said nib for a longitudinal movement of each rod along its rod extension line for adjustment of a curvature and/or stiffness of said nib,
- a slit separating a first and a second tine of the nib, an ink supply area having a lower density than the first and second tine, wherein said ink supply area preferably is positioned adjacent and in line with said slit,
- a separating structure of the nib is manufactured, said separating structure being intersected between two tines of the nib and said separating structure having a design selected from
a. a slit along a straight line,
b. a slit along curved line like e.g. a line changing its direction of curvature once or twice,
c. a slit composed of a single or multiple branched line
d. a pair of slits, wherein each of said slits extends along a straight or curved line and wherein said slits preferably run parallel,
e. multiple slits, wherein each of said slits extends along a straight or curved line and wherein said slits preferably run parallel, or
f. a combination of any of the slits according to a. to e.

14. A nib for a fountain pen, said nib being manufactured at least partially by an additive manufacturing process, in particular a method according to any of the claims 5-13.

15. A fountain pen **characterized in that** a part, in particular the nib of the fountain pen, or the whole fountain pen is manufactured in an additive manufacturing process, in particular according to a method of any of the claims 1-13.
